(19) **Europäisches Patentamt**
**European Patent Office**
**Office européen des brevets**

(11) **EP 4 152 042 A1**

(12) **EUROPEAN PATENT APPLICATION**

(43) Date of publication:
**22.03.2023   Bulletin 2023/12**

(21) Application number: **21196778.1**

(22) Date of filing: **15.09.2021**

(51) International Patent Classification (IPC):
**G01S 7/292** *(2006.01)*

(52) Cooperative Patent Classification (CPC):
**G01S 7/2926**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Infineon Technologies AG**
**85579 Neubiberg (DE)**

(72) Inventors:
- **TROTTA, Saverio**
  **80538 München (DE)**
- **RUMPLER, Christoph**
  **81825 München (DE)**

(74) Representative: **Sticht, Andreas**
**Kraus & Weisert**
**Patentanwälte PartGmbB**
**Thomas-Wimmer-Ring 15**
**80539 München (DE)**

(54) **METHOD OF PROCESSING RADAR SIGNAL AND RADAR DEVICE**

(57)   Methods for processing a received radar signal and corresponding radar devices are provided.

The method comprises averaging a first predefined number of successive received radar signal blocks to obtain an average radar signal block. The method further comprises detecting an object based on the averaged radar signal block.

Fig. 4

## Description

TECHNICAL FIELD

The present application relates to methods of processing received radar signals and to corresponding radar devices.

BACKGROUND

Radar devices, sometimes also referred to as radar sensors, are used in a variety of applications to sense their environment and detect objects, for example detect motion, position, velocity, vital signs and gestures of different static or moving objects in an antenna field of view (FoV) of the radar device. All these possibilities are to be understood as encompassed by detecting objects as used herein. For example, gesture or motion detection may be used in human machine interfaces (HMIs).

Generally, to detect objects, radar devices transmit radar signals and receive the transmitted radar signals after reflection from one or more objects. The received, previously transmitted and reflected radar signals will be shortly referred to as received radar signals herein.

To detect objects, radar devices have to be active for a specific amount of time, i.e. have to transmit and receive radar signals for a specific amount of time, to sense the environment and identify objects and their interaction. The received power of the received radar signals is indirectly proportional to the distance of the object from which the radar signal is reflected to the power of 4. Therefore, to receive radar signals with a high signal noise ratio (SNR) sufficient to reliably detect an object, much more power has to be transmitted as the distance between the radar device and the object increases.

Generally, for devices emitting electromagnetic radiation various regulations exist limiting the emitted power. For example, within the bandwidth of 57 GHz to 64 GHz, which is one of the bandwidths usable for radar, the Federal Communications Commission (FCC) limits the conducted power at the antenna port to -10dBm. A duty cycle of 10 %, i.e. transmitting only 10 % of the time, for a higher transmitted power of +10dBm can be requested based on a so called MeToo waiver. In certain applications, it may be desirable to be able to obtain a higher range without requesting such a waiver and/or without restriction of duty cycle.

SUMMARY

A method as defined in claim 1 and a radar device as defined in claim 8 are provided. The dependent claims define further embodiments. Furthermore, a method of configuring the radar device as defined in claim 12 is provided.

According to an embodiment, a method is provided, comprising:

- transmitting a radar signal of successive radar signal blocks, wherein a transmit power of the transmitted radar signal is -10dBm or less,
- receiving radar signal blocks corresponding to a reflected portion of the radar signal blocks of the transmitted radar signal,
- averaging a first predefined number of successive received radar signal blocks to obtain an averaged radar signal block, and
- detecting an object based on the averaged radar signal block.

According to another embodiment, a radar device is provided, comprising:

a transmit circuit configured to transmit a radar signal of successive radar signal blocks, wherein a transmit power of the transmitted radar signal is -10dBm or less,
a receive circuit configured to receive radar signal blocks corresponding to a reflected portion of the radar signal blocks of the transmitted radar signal, and
a processing circuit configured to average a first predefined number of successive received radar signal blocks to obtain an averaged radar signal block, and to detect an object based on the averaged radar signal block.

In yet another embodiment, a method of configuring such a radar device is provided, comprising:
setting the first predefined number based on the transmit power for transmitting radar signals and a target maximum range for the radar device.

The above summary is merely intended to give a brief overview over some embodiments and is not to be construed as limiting, as other embodiments may include different features from the ones given above.

BRIEF DESCRIPTION OF THE DRAWINGS

Fig. 1 is a block diagram of a radar device according to an embodiment.

Fig. 2 is a diagram illustrating radar signal blocks.

Fig. 3 is a diagram illustrating sampling of a radar chirp.

Fig. 4 is a block diagram of a method according to an embodiment.

Fig. 5A illustrates a radar signal according to a comparative example, and Fig. 5B illustrates a radar signal according to an embodiment.

Fig. 6 illustrates signals and operations in an embodiment using a plurality of transmit antennas.

Fig. 7 illustrates an averaging technique and circuit according to some embodiments.

Fig. 8 illustrates a method of configuring a radar device according to some embodiments.

DETAILED DESCRIPTION

In the following, various embodiments will be described in detail referring to the attached drawings. These embodiments are given by way of example only and are not to be construed as limiting in any way. For example, while embodiments may include a plurality of features (elements, components, acts, events, steps and the like), in other embodiments some of these features may be omitted or may be replaced by alternative features. In addition to the features explicitly shown and described, other features may be provided, for example, features used in conventional radar devices. For instance, embodiments discussed herein relate to processing received radar signals by averaging. Apart from these averaging techniques, radar devices and methods may be implemented in any conventional manner, for example as regards receiver and transmitter architectures, and processing of the averaged radar signals, that may be processed as conventional (non-averaged) radar signals in conventional devices. Also, components like filters may be provided as in conventional devices. Such conventional parts of radar devices and methods will therefore not be described in detail.

Features from different embodiments may be combined to form further embodiments. Variations, modifications and details described with respect to one the embodiments may also be applied to other embodiments and will therefore not be described repeatedly.

Any numerical values given serve merely for illustration purposes and are not to be construed as limiting, as depending on implementation different numerical values may apply.

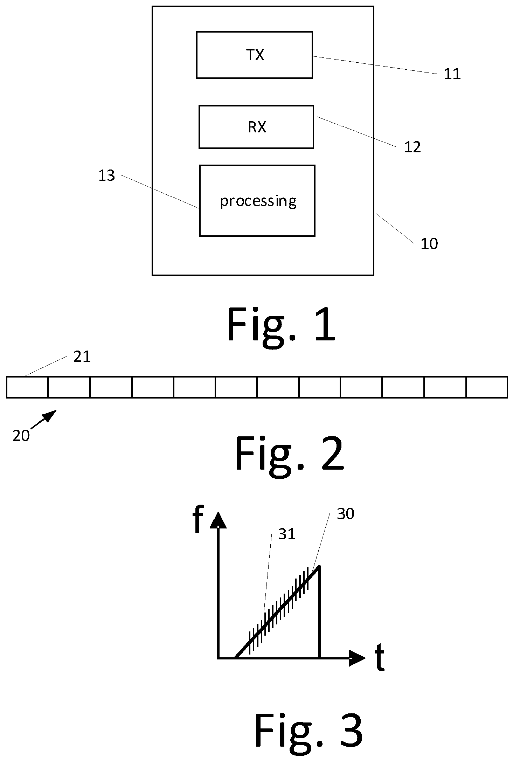

Turning now to the figures, Fig. 1 is a block diagram of a radar device 10 according to an embodiment. Radar device 10 includes a transmit circuit 11 for transmitting radar signals and a receive circuit 12 for receiving the transmitted radar signals reflected from an object. These transmitted, reflected and received again radar signals, as mentioned above, will shortly be referred to as received radar signals herein.

Transmit circuit 11 an receive circuit 12 may be implemented in any conventional manner for transmitting and receiving radar signals and may include components like amplifiers, frequency generators, filters, mixers, one more antennas (for example in form of an antenna array etc.). In some embodiments, transmit circuit 11 and receive circuit 12 may use a beamforming technique using an antenna array.

Furthermore radar device 10 comprises a processing circuit 13 for processing received radar signals. Processing circuit 13 may include an analog-to-digital converter used to convert received radar signals into a stream of digital samples, and digital processing circuitry like a digital signal processor (DSP), an application specific integrated circuit (ASIC), a general purpose microprocessor programmed accordingly or the like used for processing the received signals. In some embodiments, transmit circuit 11, receive circuit 12 or both may use two or more channels for transmitting and receiving radar signals, respectively, each using their respective antenna or antenna array.

As will be discussed below in more detail, the transmitted and received radar signals include a plurality of radar signal blocks, and processing circuit 13 employs averaging of a plurality of received radar signal blocks, and then further processes averaged radar signal blocks.

A radar signal block, as used herein, refers to a radar signal received during a certain time duration. This illustrated in Fig. 2. Fig. 2 schematically shows a radar signal 20 over time with a plurality of consecutive radar signal blocks 21. In case of a continuous wave (CW) radar, each radar signal block 21 may include a predefined time duration of the CW radar signal, for example of the order of 10 μs.

In other embodiments, a frequency modulated continuous wave (FMCW) radar may be used, which employs so called radar chirps, which have a modulated, typically linearly rising, frequency. In this case, each radar signal block may include one radar chirp. In some embodiments, each radar signal block may include a single such radar chirp. Such a radar chirp is schematically shown in Fig. 3. A curve 30 shows the frequency for one chirp over time. In the example shown, the frequency rises from a lower value to an upper value in a linear ramp, and then drops to the lower value for the next chirp to be started, which is also referred to as up-chirp. In other embodiments, down-chirps may be used, where the frequency falls from an upper value to a lower value in a linear ramp and then jumps back up to the upper value for the next chirp.

In some embodiments, each chirp may be sampled a plurality of times, as indicated by vertical lines 31 in Fig. 3, to obtain a plurality of samples for each radar chirp, i.e. each radar signal block. In case of CW radars without frequency modulation, likewise in each radar signal block a plurality of samples may be obtained. The number of samples per radar signal block is not particularly limited, and the number of vertical lines 31 shown in Fig. 3 is merely an example. For example, in some embodiments 1024 samples per radar signal block may be obtained.

The averaging mentioned above may then may be performed on a sample basis, i.e. first samples of a predefined number of radar signal blocks may be averaged, second samples may be averaged etc., to obtain an averaged radar signal block with a corresponding plurality of averaged samples. These averaged samples may then be processed in the same manner as a conventional radar system processes un-averaged radar signal blocks.

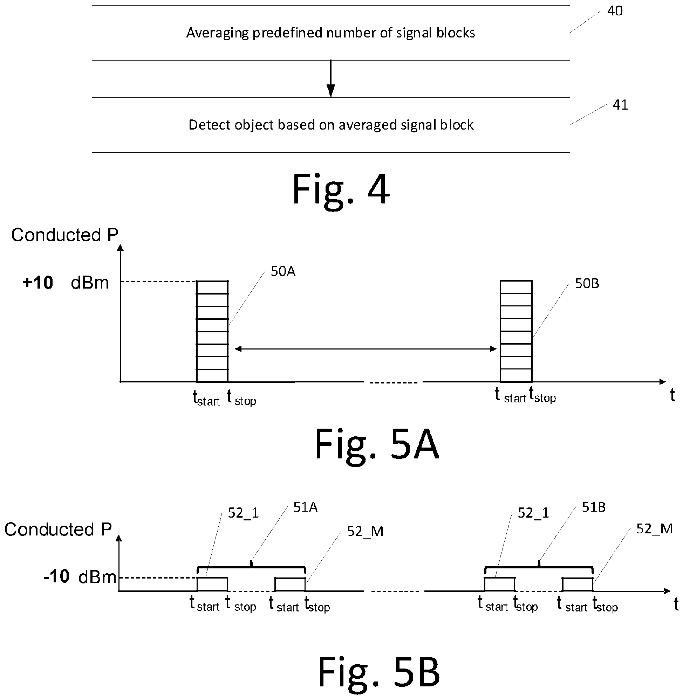

Fig. 4 is a flow chart of a method according to an embodiment, illustrating the processing of received radar signals. The method of Fig. 4 may be implemented in the radar device of Fig. 1 and will be explained referring to the previous explanations to avoid repetitions. However, this is not to be construed as limiting, and the method may also be implemented using other radar devices.

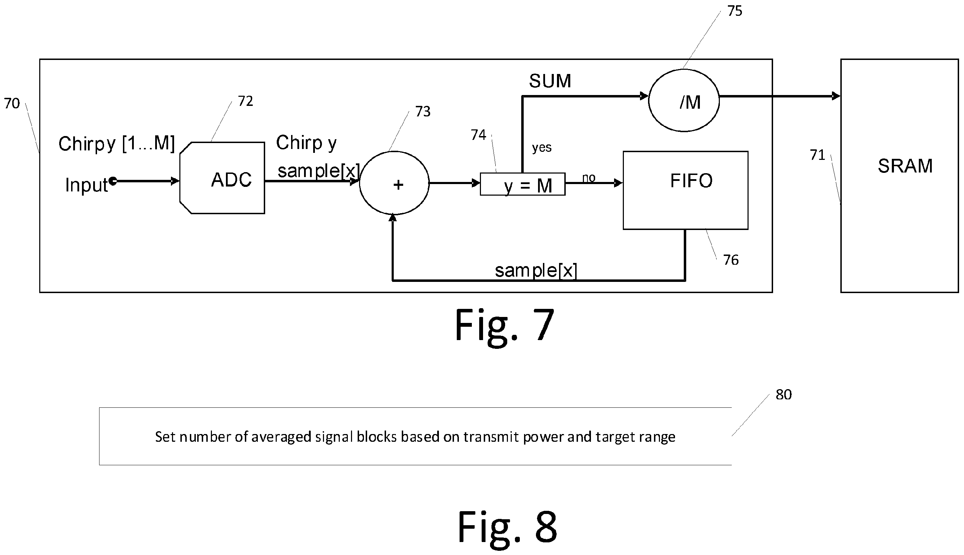

At 40 the method of Fig. 4 includes averaging a predefined number of received radar signal blocks to form an averaged radar signal block. For example, a predefined number of radar signal blocks 21 of Fig. 2 may be averaged. The averaging may be performed on a sample by sample basis, as briefly explained referring to Fig. 3 and as will be explained in more detail with respect to Fig. 7 below.

At 41, the method includes detecting an object based on the averaged radar signal block. The detecting of the object may be performed similar to object detection for non-averaged signal blocks in conventional solutions, and may include detecting presence, motion, position, velocity, vital signs, gestures or combinations thereof. As mentioned in the introductory portion, the term "detecting an object" is intended to include one or more of these possibilities and in particular is not limited to a mere presence detection. For example, presence detection may be performed by performing a range Fourier transform, for example a discrete Fourier transform (DFT) like a fast Fourier transform (FFT) and analyzing changes in the range bins, as in conventional approaches.

In some embodiments, based on the averaging a signal-to-noise ratio of received radar signals may be improved, which in turn may increase the range of the radar device or may allow to obtain a certain target range with a lower transmit power.

Generally, the received power $P_r$ of a radar signal is given by the radar equation, i.e.

$$P_r = \frac{P_t \, G^2 \, \lambda^2 \, \sigma}{(4\pi)^3 \, R^4}$$

In the above equation, $P_t$ is the transmit power, R is the distance of the object from the radar device, G is the antenna gain, $\lambda$ is the wavelength of the radar signals and $\sigma$ is the cross section of the object. As already mentioned initially, the received power $P_r$ is indirectly proportional to the distance R of the object to the power of 4, therefore for higher distances much more power has to be radiated. In embodiments, instead of transmitting higher power, averaging is used.

Fig. 5A and 5B illustrate this averaging further.

In the following, radar chirps will be used as examples for radar signal blocks, with the understanding that the techniques discussed may also be applied to other radar signal blocks.

Fig. 5A shows a reference example using radar chirps 50A, 50B with a transmit power of +10dBm and a duty cycle of 10 %, i.e. the distance in time between chirps 50A, 50B is nine times $t_{stop}$-$t_{start}$, i.e. the duration of a chirp.

For example, the duration of each chirp 50A, 50B, $t_{stop}$-$t_{start}$, may be about 10μs, and the distance between chirps may be about 90μs. This corresponds to the situation mentioned initially where a waiver may be obtained with the FCC for using a higher transmit power of +10dBm with a lower duty cycle, in this case 10%.

Fig. 5B shows example signals according to an embodiment. Here, instead of the chirps 50A, 50B with high power, chirps 52 with a lower transmit power of -10dBm are transmitted. A predefined number of M chirps 52, chirps 52_1 to 52_M are used for averaging, as indicated by brackets 51A, 51B each indicating a group of successive chirps 52. Essentially, group 51A replaces chirp 50A of Fig. 5A, and group 51B replaces chirp 50B of Fig. 5A. The predefined number M of chirps in each group, which are then used for averaging, may be selected based on a range to be obtained. In typical radar systems, every doubling of the number of chirps in a group will result in a +3dB better processed gain (+6dB signal - 3dB noise = 3dB better signal-to-noise ratio). For example, the number of chirps may be doubled six times i.e. M = 64 chirps may be used, which results in a +18dB better processing gain (6 times 3dB), which has basically the same information and the same signal-to-noise ratio as a single chirp with +10dBm.

It should be noted that no pauses (reduced duty cycle) between chirps need to be employed here, such that a high duty cycle, e.g. above 70%, above 80% or close to 100%, may be used in embodiments. It should be noted that also other numbers of chirps, for example 16, 32 or 128 chirps with -10dBm each could be used, depending on the range where objects are to be detected and the signal-to-noise ratio that needs to be achieved for the detection. The value of -10dBm has been used as an example as it corresponds to the regularly requirements of the FCC mentioned above, and may be adapted to other regularly requirements or circumstances.

While -10dBm is used as a transmit power for the averaging techniques discussed herein, which complies with FCC regulations, in other embodiments other values may be used, for example adapted to other regulatory requirements than FCC requirements (e.g. in other countries), or changed FCC requirements.

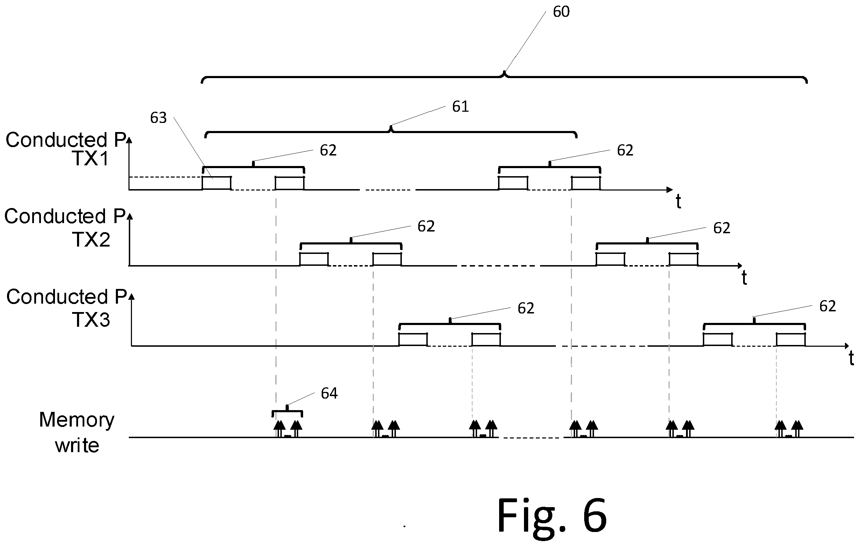

The averaging discussed above may be performed with several channels in parallel. Fig. 6 illustrates an example with three transmit channels TX1, TX2 and TX2, where the transmitted power is illustrated over time. On each transmit channel, chirps 63 with a comparatively low transmit power as explained above (-10dBm in the example above) are transmitted. A predefined number of chirps, as indicated by brackets 62, are averaged as explained above. For example, each chirp 63 may have a duration of 52 microseconds in this example, and each group of predefined number of chirps as indicated by bracket 62, in an example using 64 as the predefined number M(i.e. 64 chirps) may have a duration of 3.33 ms. A bracket 61 illustrates the duration of 16 such blocks 62 of chirps 63, and a bracket 60 illustrates the duration of the 64 times 16 chirps for all three channels, which in the numerical example currently discussed may be about 160 ms. As mentioned, these numerical values are given only for illustration purposes, and in other embodiments other numbers may be used.

In a line "memory write" of Fig. 6, writing to a memory of averaged samples for each group 64 is illustrated. For each group 62, at the end averaged sample 63 may be written to a memory, for example 1024 averaged samples is case of 1024 samples per chirp.

With the averaging performed, in case of Fig. 5B, given the same number of samples per chirp, the number of samples to be processed is increased by M (samples to be averaged) compared to Fig. 5A in case the number of chirps 50A, 50B corresponds to the number of groups 51A, 51B. In some embodiments, techniques using a memory having a first in first out structure, shortly referred to as first in first out (FIFO) memory herein, are used for efficient processing and storing such samples. With such a FIFO memory, a sample first written to the memory is read out first, as well understood by the skilled person.

A corresponding embodiment will be illustrated with respect to Fig. 7. The embodiment of Fig. 7 may for example be implemented in processing circuit 13 of Fig. 1.

In the embodiment of Fig. 7, M chirps are averaged. For each chirp, N samples are taken.

An averaging block 70 in Fig. 7 receives the chirps at an input of an analog-to-digital converter (ADC) 72. y denotes a chirp currently received, i.e. in Fig. 7 as shown a chirp y is received, y ranging from 1 to M. Analog-to-digital converter 72 may be any conventional type of analog-to-digital converter.

ADC 72 outputs an x-th sample, sample [x], of chirp y, x ranging from 1 to N. Sample [x] is provided to a first input of an adder 73. An output of adder 73 is provided to a decision block 74. In case y has reached M, meaning that the M-th chirp (last chirp of the group of chirps to be averaged) is processed, the sum SUM output by adder 73 is divided by M at 75 and is stored as an averaged sample value in a memory 71, for example an SRAM memory. Otherwise, if y is smaller than M, the output of adder 73 is written to a FIFO memory 76. FIFO memory 76 is configured to store M samples, i.e. has a depth of N (e.g. 1024 in case of 1024 samples) and a width sufficient for storing a sample. For example, the width may correspond to the bitwidth of ADC plus $\log_2(M)$, for example for a 12 bit ADC and 64 chirps (12 + 6) bit = 18 bit. The additional $\log_2(M)$ bits take into account the summing over M samples, and serve to prevent overflow (as e.g. a sum of M=4 12-bit-values may result in a 14 bit value, such that $\log_2 4=2$ additional bits are needed. An output of FIFO 76 is coupled to a second input of adder 73. With the length M of FIFO memory 76, this means that the sum of samples up to the previous chirp for sample [x], i.e. the sum related to the same sample number (first sample of a chirp, second sample of a chirp etc.) as provided to the first input of adder 73, is provided to the second input. In other words, in this way corresponding samples for each chirp of the group to be averaged are summed up by adder 73.

After all samples of the M chirps have been processed, therefore averaged sample values for all samples, for example 1024 samples, are stored in SRAM 71 and can then be further processed in any conventional manner. In this way, in SRAM 71 the same amount of memory space as in conventional solutions is necessary, and not an increased memory space to store more samples. Only FIFO memory 76 is to be provided. Some implementations of radar devices may include a FIFO memory anyway, such that in such a case no additional hardware is needed for implementation.

In case M, as in the examples above, is a power of 2, i.e. M = $2^x$, the division at 75 may be simply done by shifting the value SUM right by x bits or by selecting the corresponding slice SUM [MSB: x], i.e. the bits from the most significant bit to bit number x, discarding the remaining bits.

Fig. 8 illustrates a method for configuring a radar device as discussed above. At 80, the method comprises setting the number of averaged signal blocks, i.e. the predefined number M in the examples above, based on a transmit power usable (for example -10dBm) and a target range, i.e. a range to be achieved by the radar device, which is equal to selecting the number of average signal blocks corresponding to a signal-to-noise ratio to be achieved. As has been explained above, each doubling of the number M may increase the signal-to-noise ratio by 3dB, such that a corresponding signal-to-noise ratio required for object detection in a target range may be set. For example, in some embodiment a target range of 7m or more may be obtained with the transmit power of -10dBm mentioned

Some embodiments are defined by the following examples:

Example 1. A method, comprising:

- transmitting a radar signal of successive radar signal blocks, wherein a transmit power of the transmitted radar signal is -10dBm or less,
- receiving radar signal blocks corresponding to a reflected portion of the radar signal blocks of the transmitted radar signal,
- averaging a first predefined number of successive received radar signal blocks to obtain an averaged radar signal block, and
- detecting an object based on the averaged radar signal block.

Example 2. The method of Example 1, wherein averaging the first predefined number of received radar signal blocks comprises obtaining a second predefined number of samples from each received radar signal block and averaging corresponding samples from each of the first predefined number of radar signal blocks to obtain a second predefined number of averaged samples.

Example 3. The method of Example 2, wherein the averaging corresponding samples comprises adding a respective current sample to a value read out from a memory having a first in, first out structure configured to store a second predefined number of samples to obtain an added value, obtaining an averaged sample of the second predefined number of averaged samples based on the added value if the added value comprises a first predefined number of added samples, and writing the added value to the memory if the added value comprises less than the first predefined number of added samples.

Example 4. The method of Example 3, wherein obtaining an averaged sample of the second predefined number of averaged samples based on the added value comprises dividing the added value by the first predefined value.

Example 5. The method of any one of Examples 1 to 4, wherein each received radar signal block corresponds to a received radar chirp.

Example 6. The method of any one of Examples 1 to 5, wherein each received radar signal block corresponds to a predefined time period of the received radar signal.

Example 7. The method of Example 6, wherein a range of the object detection is 7m or more.

Example 8. A radar device, comprising:

a transmit circuit configured to transmit a radar signal of successive radar signal blocks, wherein a transmit power of the transmitted radar signal is -10dBm or less,
a receive circuit configured to receive radar signal blocks corresponding to a reflected portion of the radar signal blocks of the transmitted radar signal, and
a processing circuit configured to average a first predefined number of successive received radar signal blocks to obtain an averaged radar signal block, and to detect an object based on the averaged radar signal block.

Example 9. The radar device of Example 8, further comprising an analog-to-digital converter configured to provide a second predefined number of samples for each radar signal block, wherein the processing circuit, to average the first predefined number of successive received radar signal block, comprises:

an adder, wherein a first input of the adder is coupled to an output of the analog-to-digital converter,
a memory having a first in first out structure configured to store a first predefined number of samples, wherein an output of the memory is coupled to a second input of the adder, and wherein an output of the adder is coupled to an input of the memory.

Example 10. The radar device of Example 9, wherein the processing circuit further comprises a decision element coupled between the output of the adder and the input of the memory and configured to forward an output of the adder to the input of the memory if the output includes less than a first predefined number of added samples, and to provide the output as basis for an averaged sample of the averaged radar signal block if the output includes the first predefined number of added samples.

Example 11. The radar device of any one of Examples 8 to 10, wherein the radar device is configured to perform the method of any one of Examples 1 to 8.

Example 12. A method of configuring the radar device of any one of Examples 8 to 11, comprising:
setting the first predefined number based on the transmit power for transmitting radar signals and a target maximum range for the radar device.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

**Claims**

1. A method, comprising:

- transmitting a radar signal of successive radar signal blocks, wherein a transmit power of the transmitted radar signal is -10dBm or less,
- receiving radar signal blocks (21; 30; 52; 63) corresponding to a reflected portion of the radar signal blocks of the transmitted radar signal,
- averaging a first predefined number of successive received radar signal blocks to obtain an averaged radar signal block, and
- detecting an object based on the averaged radar signal block.

2. The method of claim 1, wherein averaging the first predefined number of received radar signal blocks (21; 30; 52; 63) comprises obtaining a second predefined number of samples (31) from each received radar signal block (21; 30; 52; 63), and averaging corresponding samples (31) from each of the first predefined number of radar signal blocks to obtain a second predefined number of averaged samples.

3. The method of claim 2, wherein the averaging corresponding samples comprises adding a respective current sample to a value read out from a memory (76) having a first in, first out structure configured to store a second predefined number of samples (31) to obtain an added value, obtaining an averaged sample of the second predefined number of averaged samples based on the added value if the added value comprises a first predefined number of added samples, and writing the added value to the memory if the added value comprises less than the first predefined number of added samples.

4. The method of claim 3, wherein obtaining an averaged sample of the second predefined number of averaged samples based on the added value comprises dividing the added value by the first predefined value.

5. The method of any one of claims 1 to 4, wherein each received radar signal block (21; 30; 52; 63) corresponds to a received radar chirp.

6. The method of any one of claims 1 to 5, wherein each received radar signal block (21; 30; 52; 63) corresponds to a predefined time period of the received radar signal.

7. The method of claim 6, wherein a range of the object detection is 7m or more.

8. A radar device (10), comprising:

a transmit circuit (11) configured to transmit a radar signal of successive radar signal blocks, wherein a transmit power of the transmitted radar signal is -10dBm or less,
a receive circuit (12) configured to receive radar signal blocks (21; 30; 52; 63) corresponding to a reflected portion of the radar signal blocks of the transmitted radar signal, and
a processing circuit (13) configured to average a first predefined number of successive received radar signal blocks (21; 30; 52; 63) to obtain an averaged radar signal block, and to detect an object based on the averaged radar signal block.

9. The radar device (10) of claim 8, further comprising an analog-to-digital converter (72) configured to provide a second predefined number of samples (31) for each radar signal block (21; 30; 52; 63), wherein the processing circuit (13), to average the first predefined number of successive received radar signal blocks (21; 30; 52; 63), comprises:

an adder (73), wherein a first input of the adder is coupled to an output of the analog-to-digital converter (72),
a memory (76) having a first in first out structure configured to store a first predefined number of samples,
wherein an output of the memory is coupled to a second input of the adder (73), and wherein an output of the adder (73) is coupled to an input of the memory (76).

10. The radar device (10) of claim 9, wherein the processing circuit further comprises a decision element (74) coupled between the output of the adder (73) and the input of the memory (76) and configured to forward an output of the adder (73) to the input of the memory (76) if the output includes less than a first predefined number of added samples, and to provide the output as basis for an averaged sample of the averaged radar signal block if the output includes the first predefined number of added samples.

11. The radar device (10) of any one of claims 8 to 10, wherein the radar device is configured to perform the method of any one of claims 1 to 8.

12. A method of configuring the radar device (10) of any one of claims 8 to 11, comprising:
setting the first predefined number based on the transmit power for transmitting radar signals and a target maximum range for the radar device.

TX

RX

processing

11

12

13

10

Fig. 1

21

20

Fig. 2

f

31

30

t

Fig. 3

| | 40 |
|---|---|
| Averaging predefined number of signal blocks | |

↓

| | 41 |
|---|---|
| Detect object based on averaged signal block | |

# Fig. 4

Conducted P

+10 dBm ---- 50A ---- 50B

$t_{start}$ $t_{stop}$ ........ $t_{start}$ $t_{stop}$ t

# Fig. 5A

Conducted P

52_1 51A 52_M 52_1 51B 52_M

-10 dBm----

$t_{start}$ $t_{stop}$ $t_{start}$ $t_{stop}$ -------- $t_{start}$ $t_{stop}$ $t_{start}$ $t_{stop}$ t

# Fig. 5B

Fig. 6

**Fig. 7**

Set number of averaged signal blocks based on transmit power and target range

**Fig. 8**

EP 4 152 042 A1

Europäisches
Patentamt

European
Patent Office

Office européen
des brevets

# EUROPEAN SEARCH REPORT

Application Number

EP 21 19 6778

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 565 870 A (FUKUHARA HIROSHIGE [JP] ET AL) 15 October 1996 (1996-10-15) * column 7, line 30 - column 18, line 54 * * figures 1-21 * | 1-12 | INV. G01S7/292 |
| A | ANDERSON R ET AL: "Ultra-Wideband Radar Sensors for Short-Range Vehicular Applications", IEEE TRANSACTIONS ON MICROWAVE THEORY AND TECHNIQUES, IEEE, USA, vol. 52, no. 9, 1 September 2004 (2004-09-01), pages 2105-2122, XP011118093, ISSN: 0018-9480, DOI: 10.1109/TMTT.2004.834569 * the whole document * | 1-12 | |

TECHNICAL FIELDS
SEARCHED     (IPC)

G01S

The present search report has been drawn up for all claims

| Place of search | Date of completion of the search | Examiner |
|---|---|---|
| Munich | 7 March 2022 | Kruck, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 6778

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2022

| Patent document cited in search report | Publication date | Patent family member(s) | Publication date |
|---|---|---|---|
| US 5565870 A | 15-10-1996 | NONE | |

For more details about this annex : see Official Journal of the European Patent Office, No. 12/82

EPO FORM P0459